# EUROPEAN PATENT SPECIFICATION

(11) **EP 3 400 785 B1**
(45) Date of publication and mention of the grant of the patent: **30.12.2020**
(21) Application number: 18170661.5
(22) Date of filing: 03.05.2018
(51) Int. Cl.: A01F 15/07

(54) **NET KNIFE ASSEMBLY**
NETZMESSERANORDNUNG
ENSEMBLE COUTEAU POUR FILET

(30) Priority: 07.05.2017 US 201715588654
(43) Date of publication of application: 14.11.2018
(73) Proprietor: CNH Industrial Belgium NV, 8210 Zedelgem (BE)
(72) Inventor: SIMMONS, Scott C., Lititz, Pennsylvania 17543 (US); PETERSON, Charles B., West Grove, Pennsylvania 19390 (US)
(74) Representative: CNH Industrial IP Department

(56) References cited:
- EP-A1- 2 525 644
- EP-A1- 2 777 380
- WO-A1-2011/089081
- US-A- 5 581 973
- US-A1- 2010 162 676

## Description

### BACKGROUND

For many years agricultural balers have been used to consolidate and package crop material so as to facilitate the storage and handling of the crop material for later use. Usually, a mower-conditioner cuts and conditions the crop material for windrow drying in the sun. When the cut crop material is properly dried, a baler, for example a round baler, travels along the windrows to pick up the crop material and form it into cylindrically-shaped round bales.

Pickups of the baler gather the cut and windrowed crop material from the ground and convey the cut crop material into a bale-forming chamber within the baler. A drive mechanism operates to activate the pickups, augers, and a rotor of the feed mechanism. A conventional baling chamber may include of a pair of opposing sidewalls with a series of belts that rotate and compress the crop material into a cylindrical shape.

When the bale has achieved a desired size and density, a wrapping system may wrap the bale to ensure that the bale maintains its shape and density. For example, a net may be used to wrap the bale of crop material. A cutting or severing mechanism may be used to cut the net once the bale has been wrapped. The wrapped bale may be ejected from the baler and onto the ground by, for example, raising a tailgate of the baler. The tailgate is then closed and the cycle repeated as necessary and desired to manage the field of cut crop material.

One of the critical features on a round baler net wrapping system is the knife. In order to produce an ideal round bale package, a uniform cut is desired across the entire width of the net. In addition to improving the appearance of the bale, a clean cut also reduces the risk of loose net ends being caught in moving parts of the baler. A high-speed impact cut in convention balers is generally desired to create a clean cut. For example, if the knife moves into the path of the net too slowly, a long ragged cut is generally produced. As a further example, if the knife contacts the net with too low of a force, the net generally will not cut due to the net being under tensioned.

Conventional balers generally include an electric motor to push the knife through the net. A high-speed impact method of cutting necessitates considerable energy be used to accelerate the knife bar to an acceptable cutting speed with the electric motor, and is also dependent on adequate net tension to achieve a uniform cut. In addition, for safety reasons, the knife should not have any stored energy in its rest position that could be triggered inadvertently. Conventional knife bar designs generally do not have sufficient speed or power to provide the desired clean cut of the net.

WO-A-2011089081 which discloses the features of the preamble of claim 1 and 12, describes an improved net cutting assembly, more particularly, an up-cut net knife for improved cutting of wrapping material (e.g., a net) that may be used to wrap bales of crop material in an agricultural baler. The up-cut net knife assembly improves net cutting performance by providing an up-cut net knife that moves in the same direction as the net whereby the motion of the net helps the knife get into the cut position. Further, embodiments of the up-cut knife assembly move the up-cut knife cutting edge at substantially the same speed and in the same direction as the net to be cut. This motion of the up-cut knife allows the up-cut knife to be lifted up into the net motion using a driver and then to continue on with no relative motion - or at least minimal relative motion of the knife to the net - until the knife gets into the cut position. In the cut position, the knife stops and the net is pulled against the knife blade resulting in cutting the net.

In accordance with the present invention, a baler comprising a net knife assembly is provided as set forth in claim 1 and a method as set forth in claim 12. Preferred embodiments of the invention may be gathered from the dependent claims.

### SUMMARY

Exemplary embodiments are directed to a net knife assembly for a harvester, such as a round or square baler, including a tensioning member that assists in positioning the knife carrier into the home position or the cut position. The exemplary net knife assembly uses a motor to initiate rotation of the knife carrier using a linkage drive system. Upon rotation of the knife carrier through a center position or plane of the tensioning member, the potential energy stored in the tensioning member accelerates rotation of the knife carrier into the home position or the cut position. Such acceleration from the tensioning member reduces the amount of energy or power needed from the electric motor, and ensures that sufficient force is applied to the net in the cut position to generate a clean cut. In some embodiments, the rotation is in a direction that opposes the direction of net or wrap travel.

In accordance with some embodiments of the present disclosure, an exemplary net knife assembly for a baler is provided. The net knife assembly includes a linkage drive system including a drive linkage coupled to a motor. The net knife assembly includes a knife carrier coupled to the linkage drive system and configured to be positioned in a home position and a cut position. The net knife assembly includes a tensioning member coupled to the linkage drive system. The motor is configured to rotate the drive linkage of the linkage drive system, rotation of the drive linkage rotating the knife carrier between the home position and the cut position. Upon rotation of the knife carrier through a center position relative to the tensioning member, the tensioning member accelerates rotation of the knife carrier into the home position or the cut position. In some embodiments, the knife assembly is linked by a linking member to a subframe or frame of the harvester, such that it is positioned sufficiently proximate to a baling chamber for net wrap material to be dispensed by adequate tension to wrap a bale forming or formed in a bale chamber. In some embodiments, the linking member or members are bolts, screws or other members capable of fastening the knife assembly to the subframe or frame of the harvester. In some embodiments, the knife assembly may be fastened to a movable element by one or a pluarality of linking members, wherein such movable element is a movable rod or series of movable rods operably attached to the frame or subframe of the harvester, the rod or movable rods capable of operating in one or more dispensing and operating conditions. In said operating condition the movable member is extended at or substantially proximate to the baling chamber of the harvester such that the distance between the net knife assembly and the baling chamber is sufficient to allow dispensing, wrapping and cutting of net wrap material round a bale of crop material in a bale chamber.

In some embodiments, the motor is an electric motor. The linkage drive system includes a slotted linkage, a bearing linkage, and an attachment linkage. The drive linkage is slidably coupled to a slot of the slotted linkage. The bearing linkage is rotatably coupled to the slotted linkage. The attachment linkage is coupled to the knife carrier at a coupling point at one end and coupled to the tensioning member at an opposing end. The center position includes alignment of the coupling point between the attachment linkage and the knife carrier, a pivot point of the knife carrier, and an anchor of the tensioning member, along a plane.

Rotation of the knife carrier above the center position accelerates rotation of the knife carrier with the tensioning member into the cut position. Rotation of the knife carrier below the center position accelerates rotation of the knife carrier with the tensioning member into the home position. In some embodiments, one full rotation of the drive linkage in a single direction rotates the knife carrier from the home position to the cut position, and from the cut position to the home position. In some embodiments, the tensioning member accelerates rotation of the knife carrier into the home position or the cut position without assistance or without substantial assistance from the motor. The net knife assembly includes knife coupled to the knife carrier.

In accordance with embodiments of the present disclosure, an exemplary net wrapping system for a baler is provided. The net wrapping system includes a net dispensing assembly and a net knife assembly. The net dispensing assembly includes a supply roll holding a net material. The net dispensing assembly includes a duckbill for receiving the net material from the supply roll and feeding the net material into a bale chamber along a first direction of travel. The net dispensing assembly includes one or more bale chamber rolls proximate the bale chamber for receiving the net material from the duckbill.

The net knife assembly includes a linkage drive system including a drive linkage coupled to a motor. The net knife assembly includes a knife carrier coupled to the linkage drive system and configured to be positioned in a home position and a cut position. The net knife assembly includes a tensioning member coupled to the linkage drive system. The motor is configured to rotate the drive linkage of the linkage drive system, rotation of the drive linkage rotating the knife carrier between the home position and the cut position. Upon rotation of the knife carrier through a center position relative to the tensioning member, the tensioning member accelerates rotation of the knife carrier into the home position or the cut position.

In some embodiments, rotation of the knife carrier into the cut position is in a second direction of travel, the second direction of travel being opposite from the first direction of travel. The supply roll includes a cylindrical body extending transversely across the baler. The duckbill is configured to be moved between a home position and an insert position. The linkage drive system includes a slotted linkage, a bearing linkage, and an attachment linkage. The drive linkage is slidably coupled to a slot of the slotted linkage. The bearing linkage is rotatably coupled to the slotted linkage. The attachment linkage is coupled to the knife carrier at a coupling point at one end and coupled to the tensioning member at an opposing end. The center position includes alignment of the coupling point between the attachment linkage and the knife carrier, a pivot point of the knife carrier, and an anchor of the tensioning member, along a plane.

In accordance with embodiments of the present disclosure, an exemplary baler is provided. The baler includes a frame, an apron assembly disposed within the frame and configured to form a bale, and a net wrapping system. The net wrapping system includes a net dispensing assembly and a net knife assembly. The net dispensing assembly includes a supply roll holding a net material. The net dispensing assembly includes a duckbill for receiving the net material from the supply roll and feeding the net material into a bale chamber along a first direction of travel. The net dispensing assembly includes one or more bale chamber rolls proximate the bale chamber for receiving the net material from the duckbill.

The net knife assembly includes a linkage drive system including a drive linkage coupled to a motor. The net knife assembly includes a knife carrier coupled to the linkage drive system and configured to be positioned in a home position and a cut position. The net knife assembly includes a tensioning member coupled to the linkage drive system. The motor is configured to rotate the drive linkage of the linkage drive system, rotation of the drive linkage rotating the knife carrier between the home position and the cut position. Upon rotation of the knife carrier through a center position relative to the tensioning member, the tensioning member accelerates rotation of the knife carrier into the home position or the cut position.

The linkage drive system includes a slotted linkage, a bearing linkage, and an attachment linkage. The drive linkage is slidably coupled to a slot of the slotted linkage. The bearing linkage is rotatably coupled to the slotted linkage. The attachment linkage is coupled to the knife carrier at a coupling point at one end and coupled to the tensioning member at an opposing end.

In accordance with embodiments of the present disclosure, an exemplary method of operating a net knife assembly for a baler is provided. The method includes actuating motor to rotate a drive linkage of a linkage drive system. The method includes rotating a knife carrier coupled to the linkage drive system based on rotation of the drive linkage between a home position and a cut position. Upon rotation of the knife carrier through a center position relative to a tensioning member coupled to the linkage drive system, the method includes accelerating rotation of the knife carrier into the home position or the cut position with the tensioning member. The method includes accelerating rotation of the knife carrier into the cut position after the knife carrier is rotated above the center position. The method includes accelerating rotation of the knife carrier into the home position after the knife carrier is rotated below the center position.

Other objects and features will become apparent from the following detailed description considered in conjunction with the accompanying drawings. It is to be understood, however, that the drawings are designed as an illustration only and not as a definition of the limits of the present disclosure.

### BRIEF DESCRIPTION OF THE DRAWINGS

To assist those of skill in the art in making and using the disclosed net knife assemblies, reference is made to the accompanying figures, wherein:
FIG. 1 is a cutaway side view of a round baler including an exemplary net knife assembly of the present disclosure;
FIG. 2 is a cutaway side view of an exemplary wrapper system and net knife assembly of the present disclosure in a home position;
FIG. 3 is a cutaway side view of an exemplary wrapper system with a duckbill in an inserted position and a net knife assembly in a home position;
FIG. 4 is a cutaway side view of an exemplary wrapper system and a net knife assembly in a cut position;
FIG. 5 is a perspective view of an exemplary net knife assembly in a home position;
FIG. 6 is a detailed, perspective view of an exemplary net knife assembly in a home position;
FIG. 7 is a side view of an exemplary net knife assembly in a home position;
FIG. 8 is a side view of an exemplary net knife assembly in a home position and a partially rotated drive linkage;
FIG. 9 is a side view of an exemplary net knife assembly between a home position and a cut position, including a partially rotated drive linkage;
FIG. 10 is a side view of an exemplary net knife assembly rotated through an over center position;
FIG. 11 is a side view of an exemplary net knife assembly partially rotated into a cut position;
FIG. 12 is a side view of an exemplary net knife assembly in a cut position;
FIG. 13 is a perspective view of an exemplary net knife assembly in a cut position;
FIG. 14 is a detailed, perspective view of an exemplary net knife assembly in a cut position;
FIG. 15 is a side view of an exemplary net knife assembly in a cut position and a partially rotated drive linkage;
FIG. 16 is a side view of an exemplary net knife assembly partially rotated into a home position;
FIG. 17 is a side view of an exemplary net knife assembly partially rotated into a home position;
FIG. 18 is a side view of an exemplary net knife assembly rotated through an over center position; and
FIG. 19 is a side view of an exemplary net knife assembly in an over center position.

### DETAILED DESCRIPTION

It should be understood that the relative terminology used herein, such as "front", "rear", "left", "top", "bottom", "vertical", "horizontal", "up" and "down" is solely for the purposes of clarity and designation and is not intended to limit embodiments to a particular position and/or orientation. Accordingly, such relative terminology should not be construed to limit the scope of the present disclosure. In addition, it should be understood that the scope of the present disclosure is not limited to embodiments having specific dimensions. Thus, any dimensions provided herein are merely for an exemplary purpose and are not intended to limit the invention to embodiments having particular dimensions.

"Net material" as used herein is any material that is used in a baling mechanism for wrapping a bale of harvested crop material. In some embodiments, net material is netting, plastic or fabric enveloping, tying and/or binding the crop material. In some embodiments, the net material is netting dispensed by a net wrap from a position within the harvester at or substantially proximate to a baling chamber.

The disclosure relates to a harvester comprising at least one net knife assembly disclosed herein. In some embodiments, the harvester, is a square or round baler, cotton harvester, or combine comprising a baling mechanism.

In some embodiments, an exemplary net knife assembly includes an electric motor to arm and trip a linkage that allows the knife carrier to be driven by a spring to cut the net. The mechanical linkage also allows the spring tension to safely maintain the knife in the home position to eliminate the risk of unintended release of potential energy. In particular, to drive the knife with enough speed and force to cut the net cleanly, a spring is used to accelerate the knife carrier. The potential energy is stored in the spring in the arming cycle by the electric motor. For safety reasons, the linkage reverses the spring force and uses the stored energy from the spring in the armed position to pull the carrier into the rest stop. When the proper amount of net has been applied to the bale, the electric motor trips the linkage and allows the spring to freely drive the knife into the path of the net, producing a crisp, clean cut.

The exemplary net knife assembly has sufficient power to swing the knife into the path of the net, opposing the direction of net travel. The electric motor is used to store potential energy in the spring and therefore should be sized according to the spring. Using only the electric motor to re-arm the knife carrier allows the linkage to be designed at a ratio that allows for a slow motion of the motor, reducing the demand for motor power compared to the power applied by the spring. During the cutting motion, when the knife must move rapidly, the spring force is exerted for a short time. After the cutting motion, the knife has a significantly longer time to re-arm the knife while another bale is being formed, thereby reducing the necessary power output of the motor.

Embodiments of the present invention are particularly well suited, but in no way limited to, use with agricultural balers. The present invention may also find utility in use with round, square, or rectangular balers, for example, or any other baler used in the industry.

Agricultural balers, such as round balers, are well known in the agricultural industry, and the instant invention can be used with substantially any of such machines. Reference is made, for example, to U.S. Patent Nos. 6,877,304; 6,688,092; 6,644,006 and 6,295,797 that illustrate such balers, the disclosure of which is incorporated herein by reference in their entirety. For illustrative purposes, details of an exemplary round baler in which the net knife assembly of the present disclosure may be used are disclosed in and will be described, in part, with reference to U.S. Patent No. 5,581,976, which is also hereby incorporated by reference in its entirety.

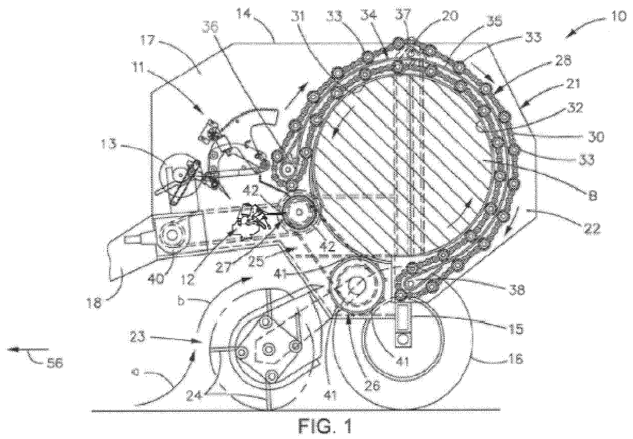

FIG. 1 depicts an exemplary agricultural round baler, generally designated 10, in which embodiments of the net knife assembly of the present disclosure may be employed. As alluded to previously, the crop in the field is usually arranged in a windrow as it is engaged by the baler 10 being pulled along a windrow of cut crop material by a tractor (not shown). FIG. 1 shows a fixed chamber round baler 10 having a wrapping system for wrapping a cylindrical package of crop material (not shown) formed in a round baler 10. In particular, the wrapping system of baler 10 includes a net dispensing assembly 11 and a net knife or cutting assembly 12 for cutting web material, such as net, issued from a supply roll 13.

As shown in FIG. 1, round baler 10 includes a main frame 14 with a main support beam 15 on which a pair of wheels 16 (only one shown) are rotatably affixed. The main frame 14 includes a pair of side walls between which a cylindrical bale forming chamber extends. For the purposes of clarity, only one wall 17 is shown in FIG. 1 and the elements mounted inwardly thereof are shown in full lines for clarity. For illustrative purposes reference letter B is used to designate a bale, shown in cross section in the chamber.

Baler 10 includes a tongue 18 extending from the forward portion of main frame 14 for conventional connection to a tractor (not shown). Pivotally connected to the sidewalls of main frame 14 by a pair of stub shafts 20 is tailgate 21 which may be closed, as shown throughout the drawings, during bale formation or pivoted open about stub shafts 20 to discharge a completed bale. The tailgate includes tailgate walls 22 coextensive with side walls 17. A pickup assembly 23 mounted on main frame 14 in a suitable manner includes a plurality of fingers or tines 24 moveable in a predetermined path to lift crop material from the ground, generally depicted by direction arrow a, and deliver it rearwardly (arrow b) toward a transverse inlet 25 in the chamber defined by a floor roll 26 and a transverse stripper roll 27, both of which rolls are rotatably supported on mainframe 14 between sidewalls 17.

The bale forming chamber is defined primarily by an apron assembly 28 including a pair of support chains 30 mounted to travel along a continuous path, the inner run of which is defined on sidewalls 17 and tailgate walls 22 by front and rear sections 31, 32 of a continuous chain guide track that separates at a point of track adjacent the stub shaft 20 during bale discharge. The apron assembly 28 includes a plurality of parallel tubular crop engaging slats 33 extending between chains 30 to provide a cage-like periphery of the cylindrically shaped chamber. Radially outward of the inner run of apron assembly 28 are front and rear sections 34 of continuous cylindrical bale chamber wall. These sections, also separable during bale discharge, are mounted between side walls 17 and tailgate walls 22, respectively, for maintaining integrity between the outer and inner runs of chain 30.

Operatively engaged with chain 30 are drive sprocket 36 mounted between sidewalls 17, idler sprockets 37 also mounted between sidewalls 17 on shaft 20, and idler sprocket 38 mounted between tailgate walls 22. A conventional chain drive system for drive sprocket 36 is provided via appropriate coupling to gearbox 40 in a conventional manner, diagrammatically depicted in phantom outline outwardly of sidewall 17. The bale forming chamber is further defined by the outer conveying surfaces of floor roll 26 and stripper roll 27, both of which are driven in a direction opposite that of the bale chamber direction by conventional drive means appropriately coupled to gear box 40. In FIG. 1, floor roll 26 receives bale material at its forward surface, moving the bale material upward and rearward, clockwise as shown in FIG. 1. Bale material leaves the floor roll 26 and enters the bale chamber which rotates moving the bale material from a lower position, rearward and upward in a circular motion, counterclockwise as shown in FIG. 1. These rolls 26, 27 may be provided with ribs 41, 42 to enhance their ability to convey crop in the chamber as a bale is being formed. Other forms of aggressive surface structure may be used to accommodate various types of crops and conditions.

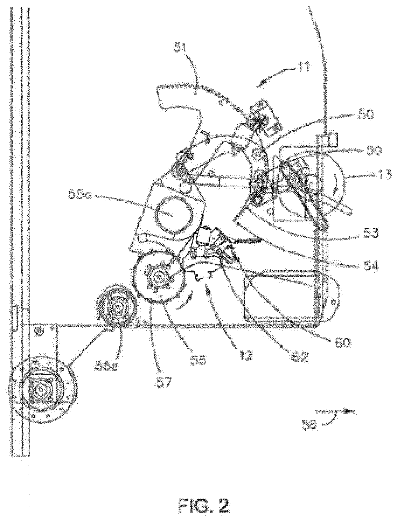

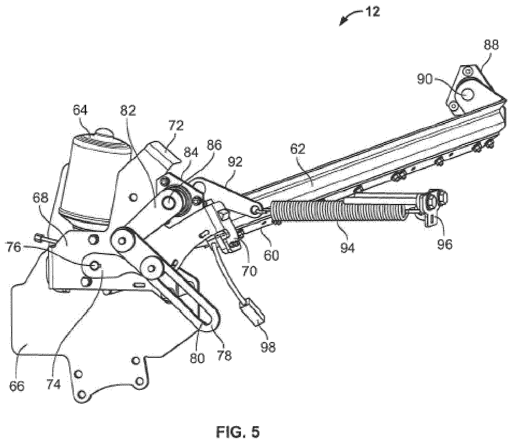

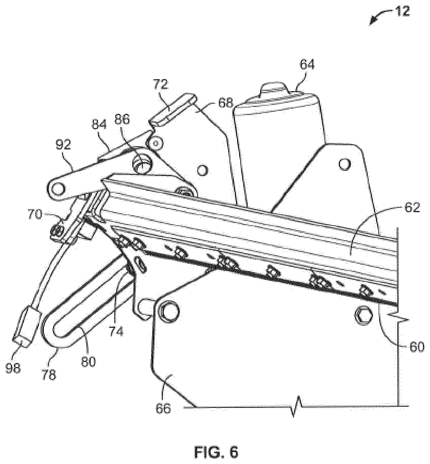

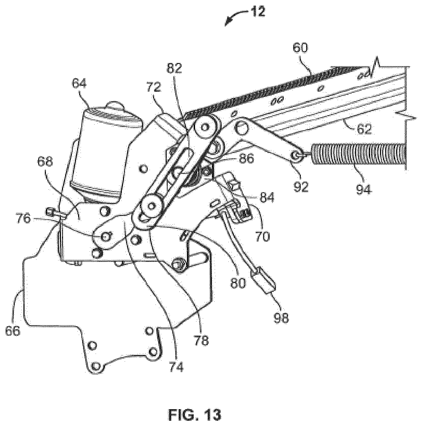

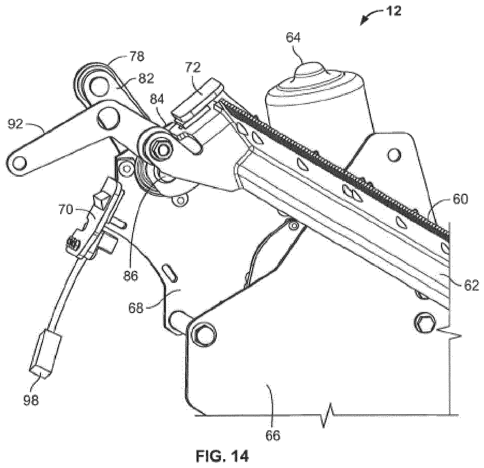

FIGS. 2-4 show an exemplary embodiment of the bale wrapping system including net dispensing assembly 11 and net knife assembly 12. As shown, the net dispensing assembly 11 includes a net roll 13, net spreader rolls 50, a duckbill assembly 51, a duckbill motor 52, and duckbill 53. The net cutting assembly includes a net knife assembly 12 positioned below the net dispensing assembly 11. In this arrangement, the knife cuts the net from below. Although the embodiments depicted and described herein relate to embodiments cutting the net from below, it should be noted that a similar knife arrangement could be employed for cutting from above, with the opposite movement, so long as the knife moves in a direction opposing motion of the net. The net knife assembly 12 is described in more detail below and with respect to FIGS. 5-19. Bale chamber rolls 55 facilitate the forming of the bale and wrapping of the bale with the net. Reference numeral 55a is used to denote the location of the axis of a bale chamber roll, which is not shown for clarity.

The net may be fed from the net roll 13, travels over the net spreader rolls 50 and exits at a tip 54 of the duckbill 53. The tip 54 of the duckbill 53 serves to pinch the net and prevents the net from snapping back through the duckbill 53 once it is cut. Generally, a portion of net can extend out of the tip 54 after a net cutting action. For example, a section of net that hangs out of the tip 54 of the duckbill 53 can be where the net grabs on to the bale when the duckbill 53 is inserted for the next bale wrapping cycle.

The duckbill motor 52 may be dedicated to the duckbill 53 and operation of the duckbill motor 52 functions to insert the duckbill 53 to commence a net wrapping cycle and to retract the duckbill 53 at the end of the wrapping cycle once the net has been cut. The net spreader rolls 50 function to define the path of the net as it weaves through the duckbill assembly 53 and to ensure the net is stretched to one side of the bale to the other side of the bale. In the operation of the illustrated net dispensing assembly 11, the net comes off the bottom of the net roll 13, which, in the figure, rotates clockwise, and goes around the upper side of the upper net spreader roll 50. The net then makes a substantially 180-degree turn and goes on the net roll side of the lower net spreader roll 50, and then through the tip 54 of the duck bill 53. The rotational direction of the net roll 13 is unimportant, but will ultimately determine the location where the net leaves the roll, and/or the number and placement of additional rolls needed to direct the net appropriately to the duckbill 53, and eventually rearward, toward the bale chamber. The front of the baler 10 is indicated by arrow 56.

The bale chamber roll 55 closest to the net knife assembly 12 may include ribs 57 disposed about the outside of the roll. A bale chamber roller 55 positioned above this roller (not shown) may also include ribs. A gap or clearance may be formed between these two bale chamber rollers 55 to allow access for the tip 54 of the duckbill 53. As the bale chamber roll 55 rotates, the net pinches between the rolls and the bale and ribs 57 help grabs the net and feed it into the bale chamber and onto the bale. In the illustrated embodiment, the bale may rotate such that the top material moves forward and downward, with respect to the baler 10, clockwise as shown in the figure, in the chamber and the bale chamber rolls 55 rotate in the opposite direction (counterclockwise).

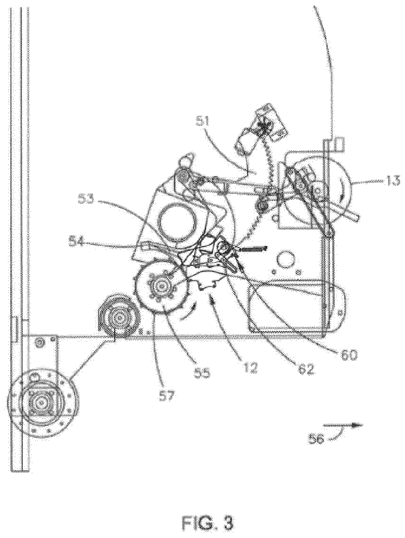

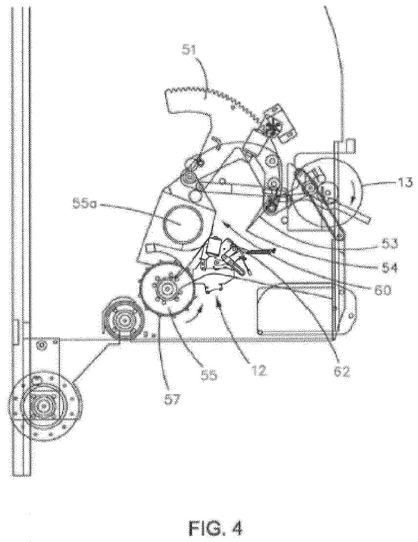

FIG. 2 shows the net dispensing assembly 11 and net knife assembly 12 in the home position. FIG. 3 shows the duckbill 53 in the net start or wrap position and the net knife assembly 12 in an intermediate position (e.g., a position between the home and the cut positions). FIG. 4 shows the net dispensing assembly 11 in the home position and net knife assembly 12 in the cut position.

As shown in FIGS. 2-4, from the home position, the knife carrier 62 of the net knife assembly 12 rotates clockwise and forward with respect to the baler 10 as shown in FIGS. 5-19, and the knife 60 clockwise and forward toward the bale chamber and into the net. The net is traveling rearward toward the bale chamber. As such, the direction of net travel and the direction of knife 60 travel are in opposite directions. As will be discussed in greater detail below, as the knife 60 approaches the cut position, a tensioning member (e.g., a spring) accelerates the knife 60 toward the net to impart sufficient force for a clean cut. The opposite direction of travel of the knife 60 and net assists with tensioning the net and creating clean cut. To return to the home position, the knife carrier 62 and knife 60 are rotated counterclockwise with respect to the baler 10.

A typical bale wrapping cycle and net cutting operation for the embodiment shown in FIGS. 2-4 may operate as follows. In the home position (FIG. 2), the knife carrier 62 of net knife assembly 12 is in the lower or home position and the duckbill 53 of the net dispensing assembly 11 is in the raised or home position. The home position would be typical of the time when a bale is being formed. At some point in time the bale forming operation would be complete and it would be time to wrap the bale. At this time, the duckbill 53 would move to the net start position where the duckbill 53 rotates into the bale chamber as shown in FIG. 3. The duckbill tip 54 fits in between upper and lower bale chamber rolls 55 (the upper roll is not shown for clarity, but its location is marked 55a) and the net is pinched between the bale and the lower roll causing the net to start to feed on to the bale. Sensors (not shown) may be provided to determine when the net is flowing on to the bale.

Once it is determined that the bale is properly wrapped, the duckbill 53 is retracted out of the bale chamber and returns to the duckbill home position (see FIG. 4). Completion of the net wrapping may be determined using sensors and/or via passage of a specified time period. At this point in the bale wrapping cycle, the net is still flowing out of the duckbill 53 to the bale chamber. To cut the net, the knife carrier 62 of net knife assembly 12 is rotated clockwise to the cut position. When the knife carrier 62 reaches the cut position, the knife 60 stops moving and the net is forced or pulled against the knife 60 and the net is cut. In some embodiments, the knife 60 is forced or pulled against the net by the tensioning member, and the net is cut. In an ideal situation, the net is cut as soon as the knife 60 is actuated into the cut position and the net stops being fed. In the cut position, the knife 60 is positioned a distance rearward of the duckbill tip 54 and when the net is cut a net tail remains sticking out of the duckbill 53 (the net tail being essentially the distance between the knife 60 and the tip of the duckbill 53 when the cut is made). After the net is cut, the knife 60 is rotated counterclockwise into the home position until the next cutting sequence.

FIGS. 5-19 show side, perspective and detailed views of the exemplary net knife assembly 12 as actuated step-by-step from the home position to the cut position, and back to the home position. The net knife assembly 12 includes the knife carrier 62 with a knife 60 coupled to the knife carrier 62. The net knife assembly 12 includes an electric motor 64 coupled to a mounting bracket 66. The mounting bracket 66 can be coupled to one or more parts of the frame of the baler 10 to secure the net knife assembly 12 within the baler 10. The net knife assembly 12 includes a stop bracket 68 coupled to the mounting bracket 66. The stop bracket 68 includes inwardly directed first and second stop members 70, 72 separated from each other. The first stop member 70 can be configured to abut the knife carrier 62 during rotation of the net knife assembly 12 to maintain the net knife assembly 12 in the home position, and the second stop member 72 can be configured to abut the knife carrier 62 during rotation of the net knife assembly 12 to maintain the net knife assembly 12 in the cut position.

The net knife assembly 12 includes a linkage drive system for rotating the knife 60 between the home and cut positions. The linkage drive system includes a drive linkage 74 mechanically coupled to the electric motor 64 such that actuation of the electric motor 64 rotates the drive linkage 74 counterclockwise. One end of the drive linkage 74 is rotatably coupled to a shaft 76 of the electric motor 64. The opposing end of the drive linkage 74 is slidably coupled to a slotted linkage 78. The slotted linkage 78 includes an elongated slot 80 within which one end of the drive linkage 74 can travel. One end of the slotted linkage 78 is rotatably coupled to a bearing linkage 82. The bearing linkage 82 is rotatably coupled at one end to the slotted linkage 78 and coupled to a bearing 84 at an opposing end. The bearing 84 includes a pivot shaft 86 defining an axis at which the knife carrier 62 pivots. The net knife assembly 12 includes a bearing 88 at an opposing end of the knife carrier 62 with a pivot shaft 90 aligned along the same axis of rotation as the pivot shaft 86.

The electric motor 64 drives counterclockwise rotation of the drive linkage 74 which, in turn, slides along the slot 80 and rotates the slotted linkage 78. Rotation of the slotted linkage 78 rotates the bearing linkage 82 which, in turn, rotates the knife carrier 62 and knife 60. The net knife assembly 12 includes a spring attachment linkage 92 (e.g., a substantially L-shaped linkage) coupled to the knife carrier 62 such that rotation of the knife carrier 62 rotates the spring attachment linkage 92. The net knife assembly 12 includes a tensioning member 94 (e.g., a spring) coupled to one end of the spring attachment linkage 92 and coupled at an opposing end to an anchor 96. The anchor 96 can be coupled to the frame of the baler 10.

As the knife carrier 62 is rotated over center of the tensioning member 94, the tensioning member 94 accelerates the knife carrier 62 into the home position or the cut position, thereby reducing the amount of power needed from the electric motor 64 to drive the knife carrier 62 into the home or cut positions. In some embodiments, the net knife assembly 12 can include one or more sensors 98 configured to detect when the knife carrier 62 has been positioned in the home and/or cut positions. For example, the sensors 98 can be mounted at the stop members 70, 72 and detect force imparted by the knife carrier 62 when the tensioning member 94 accelerates the knife carrier 62 into the home and/or cut positions. The baler 10 can include one or more processing devices (not shown) configured to detect signals from the sensors 98 and actuate the electric motor 64 based on the received signals, signals received from an operation interface receiving input from a user, combinations thereof, or the like.

FIGS. 5-7 show perspective, detailed and side views of the net knife assembly 12 in the home position. In particular, the knife carrier 62 is secured or held against the stop member 70 by the force of the tensioning member 94, thereby preventing undesired exposure of the knife 60. The stop member 70 prevents the knife carrier 62 from rotating counterclockwise. The knife 60 remains pointed downwardly and inwardly in the home position. The endpoint of the linkage 74 can be at or near the distal end of the slot 80 of the linkage 78.

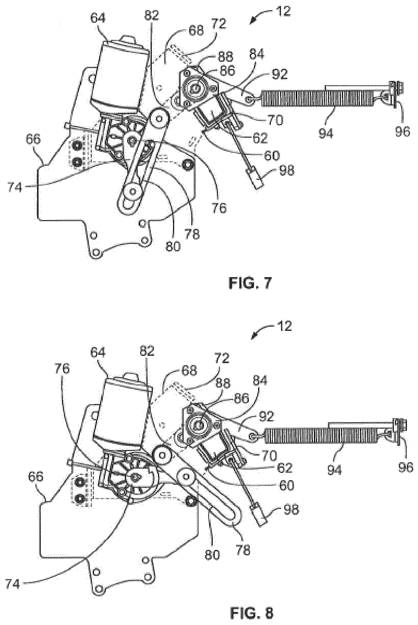

FIG. 8 shows a side view of the net knife assembly 12 in a home position with the drive linkage 74 partially rotated counterclockwise. To commence the net cutting procedure, the electric motor 64 is actuated to rotate the drive linkage 74 counterclockwise. Counterclockwise rotation of the drive linkage 74 slides the endpoint of the linkage 74 to the proximal end of the slot 80 of the linkage 78. The linkage 78 pivots at the joint with the linkage 82 without rotating the linkage 82. Therefore, only the linkages 74, 78 pivot and the knife carrier 62 is not rotated from the home position.

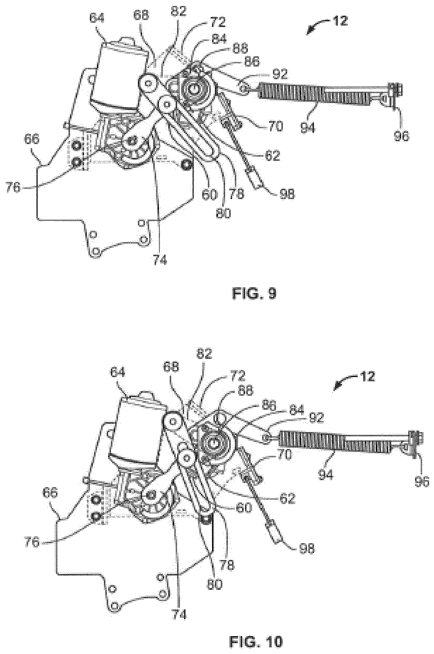

FIG. 9 shows a side view of the net knife assembly 12 in an intermediate position between the home and cut positions. As the electric motor 64 continues to rotate the drive linkage 74 counterclockwise and the endpoint of the linkage 74 is forced against the proximal end of the slot 80 of the linkage 78, the linkage 78 imparts a rotational force on the linkage 82 to rotate the linkage 82 clockwise. Rotation of the linkage 82 clockwise results in clockwise rotation of the bearing 84 and knife carrier 62. Clockwise rotation of the knife carrier 62 results in counterclockwise or upward rotation of the linkage 92, which gradually increases the tension in the tensioning member 94.

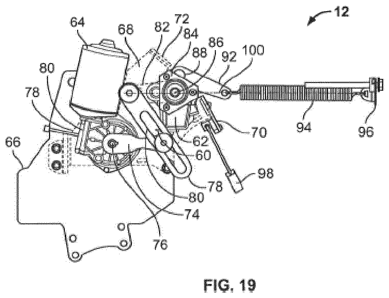

FIG. 10 shows a side view of the net knife assembly 12 in an intermediate position between the home and cut positions. In particular, the knife carrier 62 has been rotated through an over center position of the tensioning member 94. With reference to FIG. 19, when the linkage 92 attachment or coupling point with the knife carrier 62, the knife carrier 62 pivot point (e.g., pivot shaft 86), and the anchor 96 are aligned along a plane 100, the tensioning member 94 exerts substantially zero torque on the knife carrier 62. Such position is referred to herein as the center position of the tensioning member 94. Rotating the knife carrier 62 up to the point of the plane 100 can be referred to herein as an arming operation. If the knife carrier 62 is rotated above the plane 100, the tensioning member 94 accelerates rotation of the knife carrier 62 towards the cut position. If the knife carrier 62 is rotated below the plane 100, the tensioning member 94 accelerates rotation of the knife carrier 62 towards the home position. With reference again to FIG. 10, continued clockwise rotation of the linkage 82 rotates the knife carrier 62 above the plane 100 (e.g., over center of the tensioning member 94). The energy stored in the tensioning member 94 accelerates the knife cutter 62 into the cut position. Such acceleration reduces the amount of power needed from the electric motor 64 to position the knife cutter 62 in the cut position, and ensures a strong force of the knife 60 against the net for a clean cut.

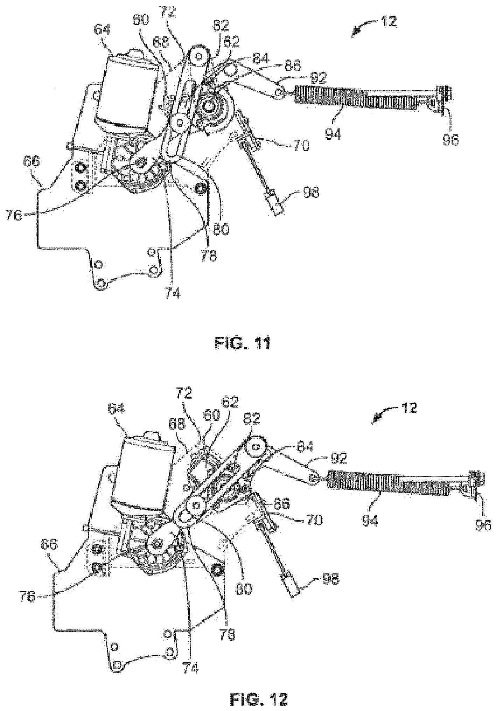

FIG. 11 shows a side view of the net knife assembly 12 partially rotated into the cut position. At this point, rather than using power from the electric motor 64, only the energy stored in the tensioning member 94 is used to accelerate the knife carrier 62 into the cut position. In particular, rather than relying on additional energy from the electric motor 64 to swing the knife carrier 62 into the path of the net, the tensioning member 94 provides the driving force for rotating the knife carrier 62 against the net. There is no movement in the electric motor 62 and energy is thereby conserved during the last steps of positioning the knife carrier 62 into the cut position.

FIGS. 12-14 show perspective, detailed and side views of the net knife assembly 12 disposed in the cut position. There is no movement in the electric motor 62 and the tensioning member 94 forces the knife carrier 62 against the stop member 72. The stop member 72 prevents further clockwise rotation of the knife carrier 62, ensuring the position of the knife carrier 62 for the net cutting procedure. The knife 60 extends a distance over the plane defined by the stop member 72 to allow the net to be cut, while preventing significant exposure of the serrated edge.

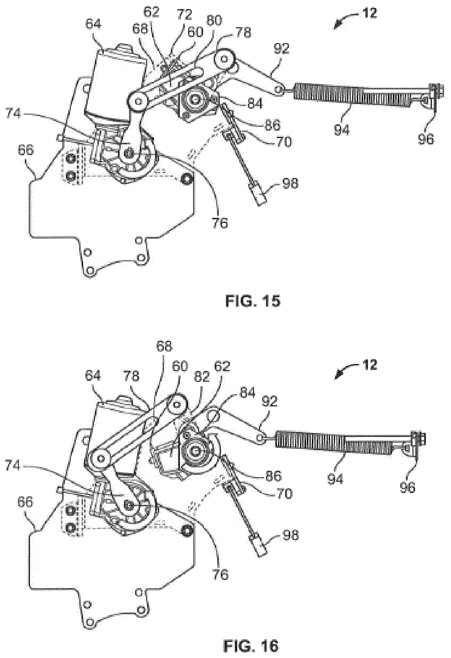

FIG. 15 shows a side view of the net knife assembly 12 in the cut position with the electric motor 64 beginning to rotate counterclockwise to reposition the knife cutter 62 in the home position after the net cutting procedure is complete. The drive linkage 74 slides to the distal end of the slot 80. As the drive linkage 74 is rotated counterclockwise (e.g., completing the initial counterclockwise rotation), the linkage 78 rotates the linkage 82 which, in turn, rotates the knife carrier 62 counterclockwise away from the cut position. Counterclockwise rotation of the knife carrier 62 increases the energy stored in the tensioning member 94.

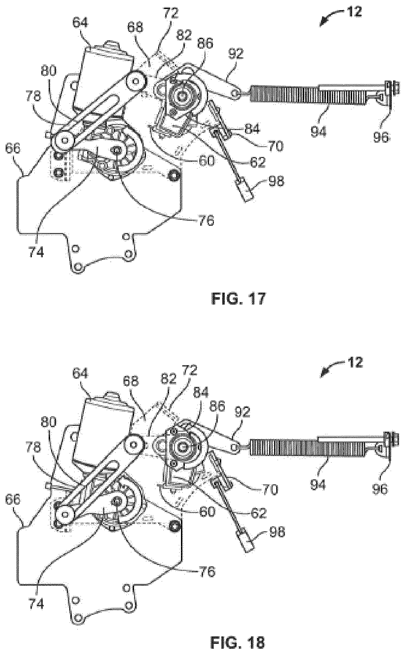

FIGS. 16 and 17 show side views of the net knife assembly 12 partially rotated from the cut position into the home position. The electric motor 64 continues to rotate the drive linkage 74 counterclockwise, resulting in further counterclockwise rotation of the knife carrier 62. As the knife carrier 62 is rotated counterclockwise, the energy stored in the tensioning member 94 increases.

FIG. 18 shows a side view of the net knife assembly 12 rotated through the over center position (e.g., below plane 100). Upon rotating below the plane 100, the energy stored in the tensioning member 94 accelerates the knife carrier 62 into the home position against the stop member 70 (e.g., the position shown in FIG. 7). The energy in the tensioning member 94 maintains the knife carrier 62 in the home position, ensuring safe operation of the net knife assembly 12. Thus, a single counterclockwise rotation of the drive linkage 74 moves the knife carrier 62 from the home position to the cut position, and back to the home position. The tensioning member 94 provides acceleration to the rotation of the knife carrier 62, reducing the overall energy requirements from the electric motor 64 and ensuring that sufficient force is applied to the net to create a clean cut.

While exemplary embodiments have been described herein, it is expressly noted that these embodiments should not be construed as limiting, but rather that additions and modifications to what is expressly described herein also are included within the present disclosure. Moreover, it is to be understood that the features of the various embodiments described herein are not mutually exclusive and can exist in various combinations and permutations, even if such combinations or permutations are not made express herein, in the limit defined by the present claims.

## Claims

1. A baler (10), comprising:
a frame (14);
a bale forming chamber disposed within the frame (14) and configured to form a bale; and
a net wrapping system, the net wrapping system comprising:
(i) a net dispensing assembly (11), comprising:
a supply roll (13) holding a net material;
a duckbill (53) for receiving the net material from the supply roll (13) and feeding the net material into a bale chamber (34) along a first direction of travel; and
one or more bale chamber rolls (50) proximate the bale chamber (34) for receiving the net material from the duckbill (53); and
(ii) a net knife assembly (12), comprising:
a linkage drive system comprising a drive linkage (74) coupled to a motor (64);
a knife carrier (62) coupled to the linkage drive system and configured to be positioned in a home position and a cut position;
wherein the motor (64) is configured to rotate the drive linkage (74) of the linkage drive system, rotation of the drive linkage (74) rotating the knife carrier (62) between the home position and the cut position;
**characterized in that** the net knife assembly further comprises a tensioning member (94) coupled to the linkage drive system,
wherein upon rotation of the knife carrier (62) through a center position relative to the tensioning member (94), rotation of the knife carrier (62) is accelerated by the tensioning member (94) into the home position or the cut position, wherein the center position comprises alignment of the coupling point between an attachment linkage (92) and the knife carrier (62), a pivot point (86) of the knife carrier (62), and an anchor (96) of the tensioning member (94), along a plane (100)

2. The baler (10) of claim 1, wherein the motor (64) is an electric motor.

3. The baler (10) of any of claims 1-2, wherein:
the linkage drive system comprises a slotted linkage (78), a bearing linkage (82), and the attachment linkage (92);
the drive linkage (74) is slidably coupled to a slot (80) of the slotted linkage (78);
the bearing linkage (82) is rotatably coupled to the slotted linkage (78); and
the attachment linkage (92) is coupled to the knife carrier (62) at a coupling point at one end and coupled to the tensioning member (94) at an opposing end.

4. The baler (10) of any of claims 1-3, wherein rotation of the knife carrier (62) above the center position accelerates rotation of the knife carrier (62) with the tensioning member (94) into the cut position.

5. The baler (10) of any of claims 1-4, wherein rotation of the knife carrier (62) below the center position accelerates rotation of the knife carrier (62) with the tensioning member (94) into the home position.

6. The baler (10) of any of claims 1-5, wherein one full rotation of the drive linkage (74) in a single direction rotates the knife carrier (62) from the home position to the cut position, and from the cut position to the home position.

7. The baler (10) of any of claims 1-6, wherein the tensioning member (94) accelerates rotation of the knife carrier (62) into the home position or the cut position without assistance from the motor (64).

8. The baler (10) of any of claims 1-7, comprising a knife (60) coupled to the knife carrier (62).

9. The baler (10) of any of claims 1-8, wherein rotation of the knife carrier (62) into the cut position is in a second direction of travel, the second direction of travel being opposite from the first direction of travel.

10. The baler (10) of any of claims 1-9, wherein the supply roll (13) comprises a cylindrical body extending transversely across the baler (10).

11. The baler (10) of any of claims 1-10, wherein the duckbill (53) is configured to be moved between a home position and an insert position.

12. A method of operating a net knife assembly (12) for a baler (10), comprising:
actuating a motor (64) to rotate a drive linkage (74) of a linkage drive system;
rotating a knife carrier (62) coupled to the linkage drive system based on rotation of the drive linkage (74) between a home position and a cut position;
**characterized in that** upon rotation of the knife carrier (62) through a center position relative to a tensioning member (94) coupled to the linkage drive system, accelerating rotation of the knife carrier (62) into the home position or the cut position with the tensioning member (94), wherein the center position comprises alignment of the coupling point between an attachment linkage (92) and the knife carrier (62), a pivot point (86) of the knife carrier (62), and an anchor (96) of the tensioning member (94), along a plane (100).

13. The method of claim 12, comprising accelerating rotation of the knife carrier (62) into the cut position after the knife carrier (62) is rotated above the center position.

14. The method of claim 12, comprising accelerating rotation of the knife carrier (62) into the home position after the knife carrier (62) is rotated below the center position.

## Patentansprüche

1. Ballenpresse (10) mit:
einem Rahmen (14);
einer Ballenbildungskammer, die innerhalb des Rahmens (14) angeordnet ist und dazu eingerichtet ist, einen Ballen zu bilden; und
einem Netz-Umwicklungssystem, wobei das Netz-Umwicklungssystem umfasst:
(i) eine Netz-Abgabeanordnung (11) mit:
einer Vorratsrolle (13), die ein Netzmaterial trägt;
einer Entenschnabel-Vorrichtung (53) zur Aufnahme des Netzmaterials von der Vorratsrolle (13) und zum Zuführen des Netzmaterials in eine Ballenpresskammer (34) entlang einer ersten Bewegungsrichtung; und
eine oder mehrere Ballenpresskammer-Walzen (50) benachbart zur Ballenpresskammer (34) zur Aufnahme des Netzmaterials von der Entenschnabel-Vorrichtung (53); und
(ii) eine Netz-Messeranordnung (12) mit:
einem Antriebsverbindungssystem umfassend ein Antriebs-Verbindungselement (74), das mit einem Motor (64) verbunden ist;
einem Messerträger (62), der mit dem Antriebsverbindungssystem verbunden ist und dazu eingerichtet ist, in einer Ausgangsstellung und in einer Schneidstellung angeordnet zu werden;
wobei der Motor (64) dazu eingerichtet ist, das Antriebs-Verbindungselement (74) des Antriebsverbindungssystems zu drehen, wobei das Drehen des Antriebs-Verbindungselements (74) den Messerträger (62) zwischen der Ausgangsstellung und der Schneidstellung dreht;
**dadurch gekennzeichnet, dass** die Netz-Messeranordnung weiterhin ein Spannelement (94) umfasst, das mit dem Antriebsverbindungssystem verbunden ist,
wobei bei einer Drehung des Messerträgers (62) relativ zum Spannelement (94) durch eine Mittelstellung die Drehung des Messerträgers (62) in die Ausgangsstellung oder die Schneidstellung durch das Spannelement (94) beschleunigt wird, wobei die Mittelstellung eine Ausrichtung des Verbindungspunkts zwischen einem Befestigungs-Verbindungselement (92) und dem Messerträger (62), einem Drehpunkt (86) des Messerträgers (62), und einer Befestigungsstelle (96) des Spannelements (94) entlang einer Ebene (100) umfasst.

2. Ballenpresse (10) nach Anspruch 1, wobei der Motor (64) ein Elektromotor ist.

3. Ballenpresse (10) nach einem der Ansprüche 1 bis 2, wobei:
das Antriebsverbindungssystem ein geschlitztes Verbindungselement (78), ein Lager-Verbindungselement (82) und das Befestigungs-Verbindungselement (92) umfasst;
das Antriebs-Verbindungselement (74) verschiebbar mit einem Schlitz (80) des geschlitzten Verbindungselements (78) verbunden ist;
das Lager-Verbindungselement (82) drehbar mit dem geschlitzten Verbindungselement (78) verbunden ist; und
das Befestigungs-Verbindungselement (92) an einem Ende an einer Verbindungsstelle mit dem Messerträger (62) verbunden ist und an einem gegenüberliegenden Ende mit dem Spannelement (94) verbunden ist.

4. Ballenpresse (10) nach einem der Ansprüche 1 bis 3, wobei eine Drehung des Messerträgers (62) über der Mittelstellung die Drehung des Messerträgers (62) in die Schneidstellung durch das Spannelement (94) beschleunigt.

5. Ballenpresse (10) nach einem der Ansprüche 1 bis 4, wobei eine Drehung des Messerträgers (62) unter der Mittelstellung die Drehung des Messerträgers (62) in die Ausgangsstellung durch das Spannelement (94) beschleunigt.

6. Ballenpresse (10) nach einem der Ansprüche 1 bis 5, wobei eine volle Drehung des Antriebs-Verbindungselements (74) in eine einzige Richtung den Messerträger (62) aus der Ausgangsstellung in die Schneidstellung und aus der Schneidstellung in die Ausgangsstellung dreht.

7. Ballenpresse (10) nach einem der Ansprüche 1 bis 6, wobei das Spannelement (94) die Drehung des Messerträgers (62) in die Ausgangsstellung oder in die Schneidstellung ohne Unterstützung durch den Motor (64) beschleunigt.

8. Ballenpresse (10) nach einem der Ansprüche 1 bis 7, umfassend ein Messer (60), das mit dem Messerträger (62) verbunden ist.

9. Ballenpresse (10) nach einem der Ansprüche 1 bis 8, wobei die Drehung des Messerträgers (62) in die Schneidstellung in eine zweite Bewegungsrichtung erfolgt, wobei die zweite Bewegungsrichtung entgegengesetzt zur ersten Bewegungsrichtung ist.

10. Ballenpresse (10) nach einem der Ansprüche 1 bis 9, wobei die Vorratsrolle (13) einen zylindrischen Körper umfasst, der sich quer durch die Ballenpresse (10) erstreckt.

11. Ballenpresse (10) nach einem der Ansprüche 1 bis 10, wobei die Entenschnabel-Vorrichtung (53) dazu eingerichtet ist, zwischen einer Ausgangsstellung und einer Einführstellung bewegt zu werden.

12. Verfahren zum Betreiben einer Netz-Messeranordnung (12) für eine Ballenpresse (10) umfassend:
Antreiben eines Motors (64) zum Drehen eines Antriebs-Verbindungselements (74) eines Antriebsverbindungssystems;
Drehen eines Messerträgers (62), der mit dem Antriebsverbindungssystem verbunden ist, zwischen einer Ausgangsstellung und einer Schneidstellung basierend auf einer Drehung des Antriebs-Verbindungselements (74);
**gekennzeichnet durch**, bei einer Drehung des Messerträgers (62) durch eine Mittelstellung relativ zu einem Spannelement (94), das mit dem Antriebsverbindungssystem verbunden ist, das Beschleunigen der Drehung des Messerträgers (62) in die Ausgangsstellung oder die Schneidstellung durch das Spannelement (94), wobei die Mittelstellung eine Ausrichtung des Verbindungspunkts zwischen einem Befestigungs-Verbindungselement (92) und dem Messerträger (62), einem Drehpunkt (86) des Messerträgers (62), und einer Befestigungsstelle (96) des Spannelements (94) entlang einer Ebene (100) umfasst.

13. Verfahren nach Anspruch 12, umfassend das Beschleunigen der Drehung des Messerträgers (62) in die Schneidstellung, nachdem der Messerträger (62) über die Mittelstellung gedreht wird.

14. Verfahren nach Anspruch 12, umfassend das Beschleunigen der Drehung des Messerträgers (62) in die Ausgangsstellung, nachdem der Messerträger (62) unter die Mittelstellung gedreht wird.

## Revendications

1. Presse à balles agricole (10) comprenant:
un cadre (14);
une chambre de compression placée à l'intérieur du cadre (14) et conçue pour former une balle; et
un système d'emballage sous filet, le système d'emballage sous filet comprenant:
(i) un ensemble distributeur de filets (11), comprenant:
un rouleau d'alimentation (13) doté de matériau de filet;
un bec de canard (53) pour recevoir le matériau de filet du rouleau d'alimentation (13) et introduire le matériau de filet dans une chambre de compression (34) dans un premier sens de déplacement; et
un ou plusieurs rouleaux de chambre de compression (50) à proximité de la chambre de compression (34) pour recevoir le matériau de filet du bec de canard (53); et
(ii) un ensemble couteau à filet (12), comprenant:
un système d'entraînement de liaison comprenant une liaison d'entraînement (74) connectée à un moteur (64);
un porte-couteau (62) relié au système d'entraînement de liaison et conçu pour être placé dans une position de départ et une position de coupe;
dans laquelle le moteur (64) est configuré pour faire tourner la liaison d'entraînement (74) du système d'entraînement de liaison, la rotation de la liaison d'entraînement (74) faisant tourner le porte-couteau (62) entre la position de départ et la position de coupe;
**caractérisée en ce que** l'ensemble couteau à filet comprend en outre un élément de tension (94) relié au système d'entraînement de liaison,
dans laquelle au moment de la rotation du porte-couteau (62) à travers une position centrale par rapport à l'élément de tension (94), la rotation du porte-couteau (62) est accélérée par l'élément de tension (94) vers la position de départ ou la position de coupe, dans laquelle la position centrale comprend l'alignement du point d'attelage entre une liaison d'attelage (92) et le porte-couteau (62), un point pivot (86) du porte-couteau (62), et un ancrage (96) de l'élément de tension (94), le long d'un plan (100).

2. Presse à balles (10) selon la revendication 1, dans laquelle le moteur (64) est un moteur électrique.

3. Presse à balles (10) selon l'une quelconque des revendications 1 à 2, dans laquelle:
le système d'entraînement de liaison comprend une liaison fendue (78), une liaison par paliers (82) et la liaison d'attelage (92);
la liaison d'entraînement (74) est reliée de manière coulissante à une fente (80) de la liaison fendue (78);
la liaison par paliers (82) est reliée de manière rotative à la liaison fendue (78); et
la liaison d'attelage (92) est reliée au porte-couteau (62) à un point d'attelage situé à une extrémité et reliée à l'élément de tension (94) à une extrémité opposée.

4. Presse à balles (10) selon l'une quelconque des revendications 1 à 3, dans laquelle la rotation du porte-couteau (62) au-dessus de la position centrale accélère la rotation du porte-couteau (62) avec l'élément de tension (94) en position de coupe.

5. Presse à balles (10) selon l'une quelconque des revendications 1 à 4, dans laquelle la rotation du porte-couteau (62) en-dessous de la position centrale accélère la rotation du porte-couteau (62) avec l'élément de tension (94) en position de départ.

6. Presse à balles (10) selon l'une quelconque des revendications 1 à 5, dans laquelle une rotation complète de la liaison d'entraînement (74) dans un seul sens fait tourner le porte-couteau (62) pour le faire passer de la position de départ à la position de coupe, et de la position de coupe à la position de départ.

7. Presse à balles (10) selon l'une quelconque des revendications 1 à 6, dans laquelle l'élément de tension (94) accélère la rotation du porte-couteau (62) vers la position de départ ou la position de coupe sans intervention du moteur (64).

8. Presse à balles (10) selon l'une quelconque des revendications 1 à 7, comprenant un couteau (60) relié au porte-couteau (62).

9. Presse à balles (10) selon l'une quelconque des revendications 1 à 8, dans laquelle la rotation du porte-couteau (62) vers la position de coupe est dans un deuxième sens de déplacement, le deuxième sens de déplacement étant opposé au premier sens de déplacement.

10. Presse à balles (10) selon l'une quelconque des revendications 1 à 9, dans laquelle le rouleau d'alimentation (13) comprend un corps cylindrique s'étendant transversalement à travers la presse à balles (10).

11. Presse à balles (10) selon l'une quelconque des revendications 1 à 10, dans laquelle le bec de canard (53) est configuré pour être déplacé entre une position de départ et une position d'introduction.

12. Méthode d'exploitation d'un ensemble couteau à filet (12) d'une presse à balles (10), comprenant:
l'activation d'un moteur (64) pour faire tourner une liaison d'entraînement (74) d'un système d'entraînement de liaison;
la rotation d'un porte-couteau (62) relié au système d'entraînement de liaison sur la base de la rotation de la liaison d'entraînement (74) entre une position de départ et une position de coupe;
**caractérisée en ce que**, au moment de la rotation du porte-couteau (62) à travers une position centrale par rapport à l'élément de tension (94) relié au système d'entraînement de liaison, accélérant la rotation du porte-couteau (62) vers la position de départ ou la position de coupe avec l'élément de tension (94), dans laquelle la position centrale comprend l'alignement du point d'attelage avec une liaison d'attelage (92) et le porte-couteau (62), un point pivot (86) du porte-couteau (62) et un ancrage (96) de l'élément de tension (94), le long d'un plan (100).

13. Méthode selon la revendication 12, comprenant l'accélération de la rotation du porte-couteau (62) vers la position de coupe après que le porte-couteau (62) a tourné au-dessus de la position centrale.

14. Méthode selon la revendication 12, comprenant l'accélération de la rotation du porte-couteau (62) vers la position de départ après que le porte-couteau (62) a tourné au-dessous de la position centrale.
